Europäisches Patentamt

European Patent Office

Office européen des brevets

(11) Veröffentlichungsnummer: **0 281 973 B1**

## (12) EUROPÄISCHE PATENTSCHRIFT

(45) Veröffentlichungstag der Patentschrift: **24.06.92**

(21) Anmeldenummer: **88103444.1**

(22) Anmeldetag: **05.03.88**

(51) Int. Cl.⁵: **F16F 13/00**

(54) **Gummielastischer, konischer Stützkörper für Hydrolager.**

(30) Priorität: **07.03.87 DE 3707445**

(43) Veröffentlichungstag der Anmeldung:
**14.09.88 Patentblatt 88/37**

(45) Bekanntmachung des Hinweises auf die
Patenterteilung:
**24.06.92 Patentblatt 92/26**

(84) Benannte Vertragsstaaten:
**AT BE DE ES FR GB IT NL SE**

(56) Entgegenhaltungen:
**EP-A- 0 155 646**
**DE-A- 3 418 123**
**DE-A- 3 607 043**

(73) Patentinhaber: **DIEHL GMBH & CO.**
**Stephanstrasse 49**
**W-8500 Nürnberg(DE)**

(72) Erfinder: **Hirchenhain, Arnold, Dr.**
**Immenweg 39**
**W-3472 Beverungen 2(DE)**
Erfinder: **Pepping, Karl-Heinz, Dr.**
**Kirchenweg 8**
**W-5353 Mechernich(DE)**

## Beschreibung

Die Erfindung bezieht sich auf einen gummielastischen, konischen Stützkörper für Hydrolager nach dem Oberbegriff des Anspruches 1.

Ein derartiger Stützkörper ist aus der DE-A-3418 123 bekannt. Der Stützkörper weist allseitig einen gleich großen Querschnitt auf, so daß er eine ausreichende Beweglichkeit in einer bevorzugten Querrichtung nicht aufweist.

Weiterhin ist aus der DE-A-3607 043 ein vibrationsdämpfendes Befestigungselement mit einem als ringförmigen Rollbalg ausgebildeten Stützkörper bekannt. Auch hier liegt eine bevorzugte Querweichheit nicht vor, da das Befestigungselement rotationssymmetrisch aufgebaut ist.

Aufgabe der Erfindung ist es daher, einen Stützkörper zu schaffen, der quer zu seiner Achsrichtung unterschiedliche Federsteifigkeiten aufweist, derart, daß neben einer optimalen Gestaltung hinsichtlich Dauerfestigkeit auch ein Bereich geschaffen wird, der gegen wechselnde Innendrücke formstabil ist.

Die Aufgabe wird gemäß den erfindungsgemäßen Merkmalen nach dem Anspruch 1 gelöst.

Vorteilhafte Weiterbildungen der Erfindung sind den Unteransprüchen zu entnehmen.

Durch die Rollbälge treten bei großen Amplituden keine Spannungsspitzen im Gummi auf. Gleichzeitig ist der so geformte Rollbalg formstabil gegenüber wechselnden Innendrücken.

Eine weitere Besonderheit liegt darin, daß der Stützkörper aufgrund der Geometrie des Rollbalges auch Querbewegungen in Richtung der Nieren unbeschadet übersteht.

Aufgrund des Rollbalg-Effektes wird eine wesentlich längere Lebensdauer des Stützkörpers erzielt. Dies gilt für axiale Bewegungen, für Querbewegungen in Richtung der Nieren als auch für die Überlagerung beider Bewegungsformen.

Bei dem erfindungsgemäßen Stützkörper treten im Nierenbereich keine Dauerbrüche, verursacht durch Zugspannungen im Gummi, auf. Der Stützkörper ist also auch in Bezug auf die Nierenbereiche dauerfest.

Die nach außen gewölbten Rollbälge sind durch ihre einstückige Ausformung Bestandteile des Stützkörpers und über ihre metallverstärkte Sockelabschnitte in Querrichtung begrenzt. Dadurch führen die Rollbälge trotz ihrer Formstabilität nicht zu einer Verhärtung des Lagers und vermeiden auch ein Flattern bei wechselnden Innendrücken.

Ein Ausführungsbeispiel der Erfindung ist in der Zeichnung dargestellt und nachfolgend beschrieben. Es zeigt:

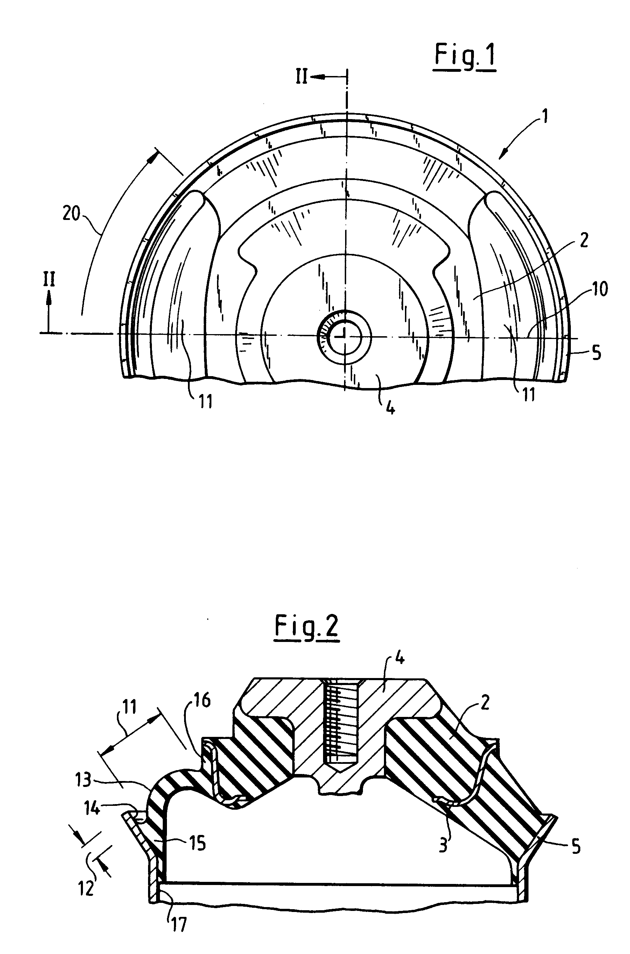

Fig. 1 einen Stützkörper in einer Ansicht von oben;

Fig. 2 einen Schnitt II-II des Stützkörpers nach Fig. 1;

Fig. 3 bis 5 den Rollbalg nach Fig. 1 in verschiedenen Belastungszuständen in vereinfachter Darstellung.

Ein Abschnitt eines Hydrolagers 1 weist einen konischen, elastischen Stützkörper 2 mit einer Metalleinlage 3 auf, der mit einem Metallanker 4 und einem Gehäuse 5 durch Vulkanisation verbunden ist. Im Stützkörper 2 sind gegenüberliegend und symmetrisch zu einer Querachse 10 zwei Nierenbereiche 11 mit geringer Werkstoffdicke 12 vorgesehen. Die Nierenbereiche 11 sind als Rollbälge 13 ausgebildet. Jeder Nierenbereich 11 erstreckt sich über einen Winkel 20 von 90°. Die Rollbälge 13 erstrecken sich zwischen einem Konus 14 des Gehäuses 5 und der Metalleinlage 3 des Stützkörpers 2. Jeder Rollbalg 13 ist mit relativ großflächigen Sockelabschnitten 15, 16 versehen. Der gehäuseseitige Sockelabschnitt 15 ist ringförmig in den zylindrischen Gehäuseabschnitt 17 hinein verlängert.

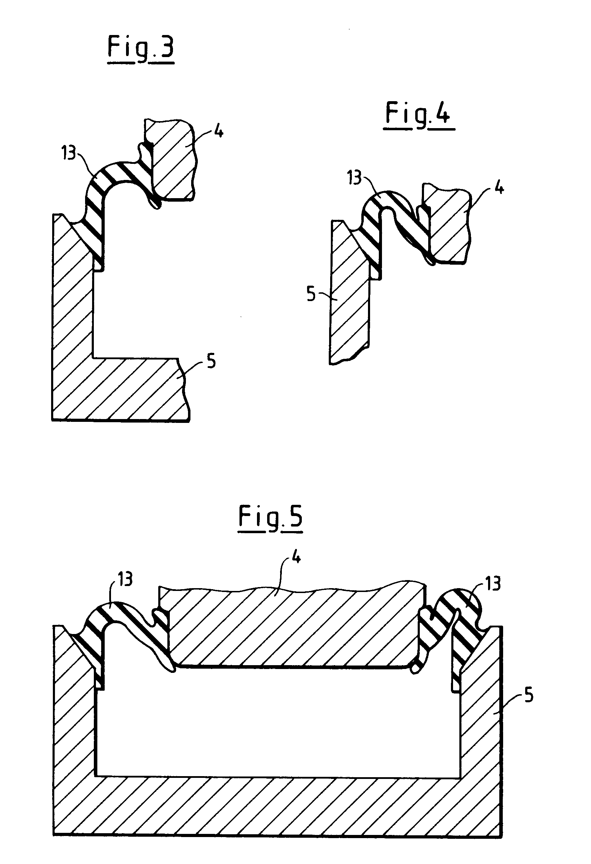

Nach Fig. 3 befindet sich der Rollbalg im unbelasteten Zustand.

Nach Fig. 4 ist der Rollbalg in der maximal eingefederten Position.

Nach Fig. 5 liegt ebenfalls die maximal eingefederte Position der Rollbälge 13 vor mit zusätzlicher, seitlicher, maximaler Auslenkung.

## Patentansprüche

1.  Gummielastischer, konischer Stützkörper (2) für Hydrolager (1), der durch Vulkanisation mit einem Metallanker (4) und mit seinem im Durchmesser größeren Bereich mit einem Gehäuse (5,17) verbunden ist,
    dadurch gekennzeichnet,
    daß der Stützkörper (2) nierenförmige Bereiche (20) mit geringer Werkstoffdicke (12) unmittelbar am Gehäuse (5,17) benachbart aufweist,
    die Bereiche (20) diametral zueinander entgegengesetzt und jeder nierenförmige Bereich (20) bezogen auf eine radiale Achse (10) spiegelbildlich symmetrisch ausgebildet ist und
    daß die Bereiche (20) aus dünnwandigen, nach außen gewölbten Rollbälgen (13) bestehen.

2.  Stützkörper nach Anspruch 1,
    dadurch gekennzeichnet,
    daß jeder Bereich (20) sich etwa über einen Winkel von 90° erstreckt.

3.  Stützkörper nach Anspruch 1,
    dadurch gekennzeichnet,
    daß der Rollbalg (13) mit großflächigen Sockelabschnitten (15,16) versehen ist, die durch Vulkanisation einerseits mit einem Konus (14) des Gehäuses (5) und andererseits mit einer Metalleinlage (3) innerhalb des Stützkörpers (2) verbunden sind.

## Claims

1. A rubber-elastic conical supporting body (2) for hydrobearings (1), which is connected by vulcanisation to a metal anchor (4) and by its region which is larger in diameter to a housing (5), characterised in that the supporting body (2) has kidney-shaped regions (20) having a slight material thickness (12) directly at the housing (5,17), the regions (20) are diametrically opposed to one another and each kidney-shaped region (20) related to a radial axis (10) is designed in a mirror image symmetrical manner and in that the regions (20) consist of thin-walled outwardly arched rolling bellows (13).

2. A supporting body according to claim 1, characterised in that each region (20) extends approximately over an angle of 90°.

3. A supporting body according to claim 1, characterised in that the rolling bellows (13) is provided with support portions (15,16) of large surface area, which are connected by vulcanisation on the one hand to a cone (14) of the housing (5) and on the other hand to a metal insert (3) inside the supporting body (2).

## Revendications

1. Corps d'appui (2) conique, présentant l'élasticité du caoutchouc, pour palier hydraulique (1), qui est assemblé par vulcanisation avec une ancre métallique (4) et, par sa zone de plus grand diamètre, avec un boîtier (5, 17), caractérisé en ce que le corps d'appui (2) présente des zones réniformes (20) d'épaisseur de matière (12) réduite, à proximité immédiate du boîtier (5, 17), en ce que les zones (20) sont diamétralement opposées l'une à l'autre et en ce que chaque zone réniforme (20) est symétrique en miroir par rapport à un axe radial (10) et en ce que les zones (20) sont faites de soufflets de roulement (13) bombés vers l'extérieur.

2. Corps d'appui selon la revendication 1, caractérisé en ce que chaque zone (20) s'étend à peu près sur un angle de 90°.

3. Corps d'appui selon la revendication 1, caractérisé en ce que le soufflet de roulement (13) est pourvu de parties de socle (15, 16) de grande surface, qui sont assemblées par vulcanisation, d'une part avec un cône (14) du boîtier (5) et d'autre part avec une pièce d'insertion métallique (3), à l'intérieur du corps d'appui (2).

Fig.1

Fig.2

## Fig.3

## Fig.4

## Fig.5